# EUROPEAN PATENT APPLICATION

(11) **EP 4 763 694 A1**
(43) Date of publication of application: **24.06.2026**
(21) Application number: 24222493.9
(22) Date of filing: 20.12.2024
(51) Int. Cl.: B64C 3/26, B64C 3/28, B64C 3/32

(54) **LOAD INTRODUCTION SYSTEM**

(71) Applicant: AIRBUS Operations GmbH, 21129 Hamburg (DE)
(72) Inventor: BURCHARD, Alexander, 21129 Hamburg (DE); GREWE, Michael, 21129 Hamburg (DE); KLEEMIß, Steffen, 21129 Hamburg (DE); JÜRDENS, Christian, 21129 Hamburg (DE)
(74) Representative: LKGLOBAL Partnerschaftsgesellschaft mbB

(57) **Abstract**

A load introduction system (10), comprising an aerodynamic closed box structure component comprising an integral closed box (12) having an upper skin section (14), a lower skin section (16), a front spar (18) and a rear spar (20), a load introduction frame (22), wherein the load introduction frame (22) is arranged at least partly in circumferential direction around the integral closed box (12), an attachment unit (24) for coupling the integral closed box (12) to a base system; wherein the attachment unit (12) is coupled to the load introduction frame (22) is provided.

## Description

### Technical Field

The present invention relates to a load introduction system and aircraft comprising said load introduction system

### Background

The transmission of loads among components of aerodynamic systems is an important aspect that has to be considered during the design process of such systems. In particular, strength requirements, low manufacturing/assembly costs in combination with a reliable and stable manufacturing/assembly process are the most important issues that have to be dealt with during the design process. The usage of fiber reinforced materials which has become more popular over the recent years allows to reduce the number of parts that have to be assembled, but makes the design process even more challenging since material behaviors are different when compared to systems in which a plurality of different parts are assembled. For example, the so-called "unfolding" of layers of a fiber reinforced material is a behavior of fiber reinforced materials that should be avoided in order to provide enhanced structural stability and strength requirements.

Current Flap Boxes are built in a differential design with different material configurations. Spanwise stiffness is achieved through spars and stringer stiffened panels while chordwise stiffness is achieved through ribs. Trailing edge and nose cap are separated structures which are assembled together with the ribs, spars and covers. The Trailing Edge is built as a bonded metal honeycomb/sheet metal sandwich structure. Load Introduction elements are integrated in the structure during assembly of the parts.

In order to reduce cost more integral box designs have been investigated to reduce assembly hours and overall part count. Different solutions to integrate a load introduction into the closed box structure have already been investigated but are not yet fully fulfilling the requirements.

### Summary of the invention

The object of the invention is to enable cost efficient manufacturing of integral box structures.

A system and an aircraft according to the features of the independent claims are provided. Further embodiments of the invention are evident from the dependent claims and from the following description.

According to the invention a load introduction system comprises an aerodynamic closed box structure component. The aerodynamic closed box structure component comprises an integral closed box having an upper skin section, a lower skin section, a front spar and a rear spar. The aerodynamic closed box structure component further comprises a load introduction frame, wherein the load introduction frame is arranged at least partly in circumferential direction around the integral closed box. The aerodynamic closed box structure component also comprises an attachment unit for coupling the integral closed box to a base system; wherein the attachment unit is coupled to the load introduction frame.

An aerodynamic closed box structure component refers to a structural element used in aerodynamic systems, such as aircraft or other vehicles subjected to airflow. It is characterized by a closed, box-like configuration configured to enclose and support internal components while maintaining a streamlined shape that minimizes drag. The component typically consists of an upper and lower skin, front and rear spars (longitudinal structural members), and may also include ribs for additional support. This type of structure is highly efficient for distributing loads, particularly aerodynamic forces, and provides significant torsional stiffness and strength. Its "closed" nature enhances its structural integrity, making it capable of withstanding complex loads while remaining lightweight.

Load introduction concepts for closed box structures, as described earlier, offer an innovative and efficient approach compared to conventional methods. These concepts eliminate the need to open the box through machining or other techniques, preserving the integrity of the structure and ensuring optimal load distribution.

This frame concept facilitates efficient manufacturing by allowing the load to be transferred effectively without compromising the box. It supports cost-effective production of integral box structures, as it minimizes the need for additional operations. The process remains streamlined, focusing on transferring loads without requiring complex modifications to the closed box, which results in a more efficient workflow and resource utilization. This approach is particularly beneficial for maintaining the structural strength and achieving a high-quality, durable outcome.

A load introduction frame is a structural component configured to efficiently manage and distribute loads from one part of a system to another. In the context of aerodynamic systems, this frame plays a key role in transferring loads, such as aerodynamic forces and operational stresses, from the aerodynamic closed box structure to the surrounding framework or base system. The load introduction frame is at least partly arranged around the closed box structure, ensuring that loads are introduced uniformly and preventing stress concentrations that could weaken the structure. Additionally, it provides support and stability to the closed box, helping to maintain its shape and performance under varying load conditions. The frame also features attachment points or interfaces for coupling with other components, ensuring a strong and reliable connection within the overall system.

According to an embodiment the load introduction frame comprises contact points at the lower skin section, the front spar and the rear spar and further comprises contact points at the upper skin section.

An advantage of the load introduction frame having contact points at the lower skin section, the front spar, and the rear spar is that it facilitates a uniform and effective distribution of loads across the aerodynamic closed box structure. By providing contact points at these critical locations, the frame ensures that forces are evenly spread, which helps to reduce localized stress concentrations and minimizes the risk of structural weaknesses. This configuration enhances the overall structural integrity of the system, as it supports the key structural components and improves load management, leading to a more robust and reliable aerodynamic structure.

According to an embodiment the load introduction frame comprises contact points at the lower skin section, the front spar and the rear spar and further comprises contact points at the upper skin section.

An advantage of the load introduction frame including contact points at the lower skin section, the front spar, the rear spar, and additionally at the upper skin section is that it allows for an even more comprehensive distribution of loads throughout the entire aerodynamic closed box structure. By extending contact points to the upper skin section, the frame ensures that forces are effectively transferred and managed across all major structural elements. This approach reduces the potential for stress concentrations at any single point, enhances the overall structural stability, and improves the load-bearing capacity of the system. Consequently, the structure becomes more resilient and reliable, which can lead to better performance and durability of the aerodynamic system.

According to an embodiment the load introduction frame comprises at least two frame elements, wherein the least two frame elements are connected via a butt joint.

A butt joint is a type of connection in which two components are joined by placing their ends together without any overlapping or interlocking. The ends of the materials are aligned and then bonded through welding, gluing, or mechanical fastening.

An advantage of the load introduction frame comprising at least two frame elements connected via a butt joint is that it allows for a straightforward and efficient assembly of the frame. The butt joint connection simplifies the design and manufacturing process, as it involves aligning the ends of the frame elements and joining them directly without the need for complex interlocking or overlapping. This can lead to reduced production costs and assembly time. Additionally, butt joints can provide strong and reliable connections when properly executed, ensuring that the load introduction frame maintains its structural integrity and effectively distributes loads across the aerodynamic closed box structure.

According to an embodiment the load introduction frame comprises at least two frame elements, wherein the least two frame elements overlap at least partly.

An overlap is a type of connection where two or more components partially cover or extend over each other. In the context of a load introduction frame, overlapping frame elements means that the elements extend beyond their edges and share a portion of their surfaces. This creates a continuous load path, enhancing structural strength and stability by distributing stress more effectively across a larger area. The overlap also aids in precise alignment during assembly, contributing to the overall robustness and reliability of the structure.

An advantage of the load introduction frame comprising at least two frame elements that overlap at least partly is that it enhances the structural strength and stability of the frame. The overlapping of frame elements creates a continuous load path, which can effectively distribute and manage stresses across a larger area. This overlap also improves the load transfer efficiency between the frame elements, reducing potential weak points and increasing the overall robustness of the load introduction system. Additionally, the overlap can help in aligning and securing the frame elements more precisely during assembly, contributing to a more durable and reliable structure.

According to an embodiment the load introduction frame comprises a multitude of frame elements.

An advantage of the load introduction frame comprising a multitude of frame elements is that it allows for greater flexibility and adaptability in the design of the load introduction system. The use of multiple frame elements enables precise customization of the load distribution and structural reinforcement across the aerodynamic closed box structure. This modular approach can improve the frame's ability to handle varying loads and stresses more effectively. Additionally, a multitude of frame elements can contribute to a more efficient use of materials, potentially reducing weight while maintaining or enhancing structural integrity. The increased number of frame elements also facilitates easier adjustments and repairs, as individual elements can be replaced or modified without requiring a complete overhaul of the frame.

According to an embodiment the aerodynamic closed box structure component comprises a nose cap, wherein the nose cap is preferably arranged at the load introduction frame at least partly.

An advantage of the aerodynamic closed box structure component including a nose cap that is at least partly arranged at the load introduction frame is that it enhances the integration and functionality of the aerodynamic system. By positioning the nose cap in conjunction with the load introduction frame, the system can achieve better load distribution and structural cohesion. The nose cap, typically a critical part of the aerodynamic structure, helps to streamline airflow and protect the underlying components. When integrated with the load introduction frame it contributes to a more robust and unified structural design, which can improve overall aerodynamic performance and stability. This arrangement also simplifies assembly and alignment, ensuring that the nose cap and load introduction frame work together seamlessly to support the aerodynamic system's efficiency and durability.

According to an embodiment the aerodynamic closed box structure component comprises a trailing edge, wherein the trailing edge is preferably arranged at the load introduction frame at least partly.

According to an embodiment further comprising a second attachment unit to provide a dual load path.

An advantage of incorporating a second attachment unit to provide a dual load path is that it enhances the reliability and redundancy of the load distribution system. By establishing two independent pathways for load transfer, the system can better manage and distribute loads, reducing the risk of failure if one load path encounters a problem. This dual-load path approach increases overall structural safety and resilience, as it ensures that loads are supported even if one attachment unit is compromised. Additionally, it can improve the system's ability to handle varying or unexpected loads, leading to a more robust and durable aerodynamic structure. This redundancy also facilitates maintenance and repair, as issues in one load path can be addressed without completely dismantling the system.

According to an embodiment the load introduction frame is attached to the integral closed box via a multitude of bolts.

Attaching the load introduction frame to the integral closed box using a multitude of bolts offers several advantages. This approach ensures a secure and robust connection by distributing the loads evenly across multiple attachment points, which reduces the risk of localized stress concentrations that could potentially weaken the structure. The use of multiple bolts also enhances the overall strength and stability of the connection, ensuring that the load introduction frame remains firmly attached to the integral closed box even under varying load conditions. Additionally, bolts facilitate straightforward assembly and disassembly, making it easier to install, adjust, and maintain the load introduction frame. This modular method also allows for the replacement of individual bolts if needed, without requiring the entire frame to be dismantled.

According to an embodiment the load introduction frame is attached to the integral closed box via bonding.

Attaching the load introduction frame to the integral closed box using bonding offers several key advantages. This method provides a seamless connection that can distribute loads evenly across the bonded surfaces, reducing the potential for stress concentrations and improving structural integrity. Bonding creates a strong, adhesive bond that can effectively transmit forces between the frame and the closed box, enhancing overall stability. Additionally, this approach eliminates the need for mechanical fasteners, which can simplify the assembly process and reduce potential points of failure. The continuous nature of the adhesive bond can also contribute to a cleaner and more streamlined design, potentially improving aerodynamic performance and reducing weight.

According to an embodiment the aerodynamic closed box structure component is made of a carbon fiber reinforced material herein also referred to as carbon fiber reinforced plastics (CFRP).

An advantage of the aerodynamic closed box structure component being made of carbon fiber reinforced material is that it provides exceptional strength-to-weight ratio. Carbon fiber reinforced materials are known for their high tensile strength and stiffness while being significantly lighter than traditional materials. This contributes to improved structural performance and durability of the aerodynamic component. Additionally, the lightweight nature of carbon fiber reinforced materials can enhance the overall efficiency of the aerodynamic system by reducing weight and drag. The material's ability to withstand high stresses and maintain structural integrity under various conditions makes it ideal for demanding aerospace and aerodynamic applications. Furthermore, carbon fiber reinforced materials offer excellent fatigue resistance and corrosion resistance, which can lead to a longer service life and reduced maintenance needs for the aerodynamic structure.

According to an embodiment the aerodynamic closed box structure component is an integrally formed structure.

An advantage of the aerodynamic closed box structure component being an integrally formed structure is that it enhances the overall strength and durability of the component. An integrally formed structure is created as a single, continuous piece, which eliminates the need for multiple components and joints. This approach reduces the potential for weak points or failure at connection interfaces, leading to improved structural integrity. Additionally, the seamless nature of an integrally formed structure can contribute to better aerodynamic performance by minimizing drag and turbulence that may be caused by joints or seams. The single-piece design also simplifies the manufacturing process and can reduce assembly time and costs, while ensuring a more reliable and cohesive structural component.

According to an embodiment the aerodynamic closed box structure component is a flap, flaperon or similar.

An advantage of the aerodynamic closed box structure component being a flap, flaperon, or similar is that it aligns with key aerodynamic control functions. Flaps and flaperons are crucial for modifying the aerodynamic properties of an aircraft, such as increasing lift and improving control during various phases of flight.

Additionally, using advanced materials like carbon fiber reinforced composites or employing integrally formed structures in these components can enhance performance and durability. This results in better lift-to-drag ratios, increased maneuverability, and improved overall efficiency. The configuration also supports optimized performance under high aerodynamic loads, contributing to safer and more efficient flight operations.

According to an embodiment an aircraft comprises the above mentioned load introduction system. For example, the load introduction system is a mechanical device which is configured to mount aerodynamic closed box structure components, in particular movables like flaps, flaperons or the like to a corresponding base system. Although, in the following, the load introduction system will be mainly described as being used for the attachment and load transmission of an aircraft flap to an aircraft wing, it should be understood that the load introduction system can also be used for other technical applications or for attaching any other of the above-mentioned exemplary aerodynamic structures.

As stated above, the load introduction system comprises an aerodynamic closed box structure component having an upper skin section and a lower skin section. The upper and lower skin sections may form a single integral part which represents the aerodynamic closed box structure component. The aerodynamic closed box structure component may have a cross-section in the form of an airfoil.

The frame serves the critical function of transferring loads from the flap to the designated attachment points, where these loads are subsequently transferred to the wing. The process of transferring the load from the box to the frame can be achieved through the use of single-side application bolts, adhesives, a combination of these methods, and/or other appropriate techniques. Importantly, this method of load transfer ensures that the box does not need to be opened during the manufacturing / assembly process, allowing for a more streamlined and efficient assembly while maintaining the structural integrity of the box.

The advantage of having the load introduction frame make only narrow contact with the integral closed box is that it minimizes the impact on the box's overall aerodynamic performance and structural integrity. By ensuring that the contact points are limited and focused, the frame helps to maintain the aerodynamic efficiency of the structure and reduces potential disturbances in the airflow. Additionally, this narrow contact approach helps in reducing the weight and complexity of the load introduction system, potentially lowering manufacturing and assembly costs while preserving the strength and functionality of the closed box.

### Brief description of the figures

Fig. 1 shows a detailed view of an integral closed box;
Fig. 2 shows a detailed view of a load introduction system;
Fig. 3 shows a detailed view of a load introduction system further comprising contact points at the upper skin section;
Fig. 4 shows a detailed view of a load introduction system comprising two frame elements connected via a butt joint.
Fig. 5 shows a detailed view of a load introduction system comprising two frame elements partly overlapping.
Fig. 6 shows a detailed view of an aircraft with possible locations of two load introduction systems.

### Detailed description

The illustrations in the figures are schematic and not to scale. If the same reference signs are used in different figures in the following description of the figures, they designate identical or similar elements. However, identical or similar elements can also be designated by different reference symbols.

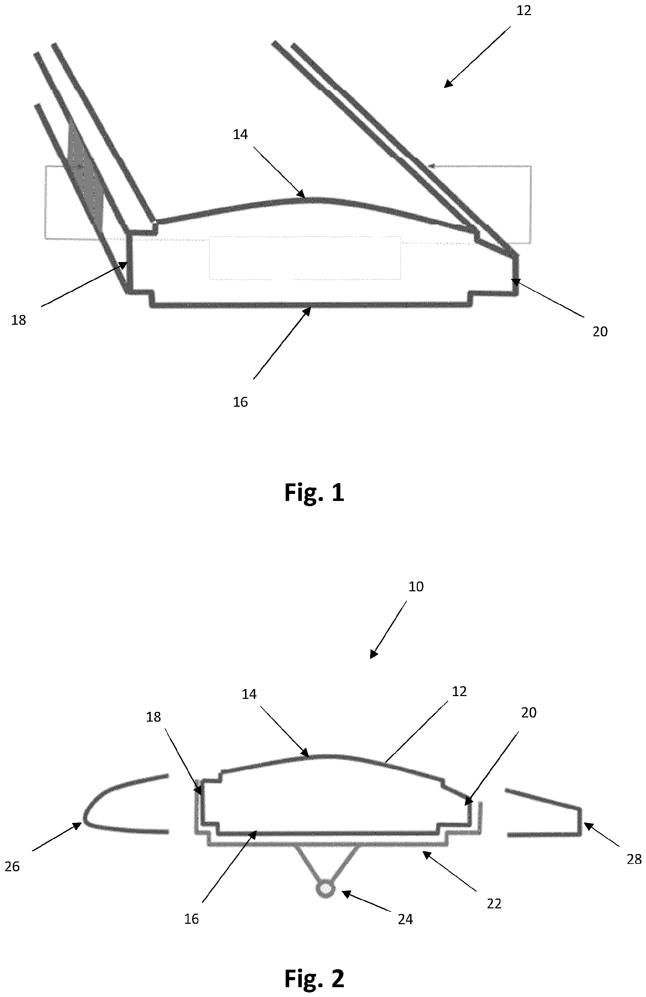

Figure 1 shows a detailed view of an integral closed box 12, which is an aerodynamic closed box structure component. The integral closed box 12 includes several key sections: the upper skin section 14 and the lower skin section 16, which form the top and bottom surfaces of the box, respectively. The structure is reinforced by a front spar 18 and a rear spar 20, which provide additional support and rigidity to the box. These spars are positioned at the front and rear of the integral closed box 12, contributing to its overall strength and stability. The indicated grey area on the front spar shows the width of the load introduction frame 22 (not shown), arranged at least partly in circumferential direction around the integral closed box 12.

Figure 2 shows a detailed view of the load introduction system 10 for an aerodynamic closed box structure component. This system comprises an integral closed box 12 featuring an upper skin section 14, a lower skin section 16, a front spar 18, and a rear spar 20. Surrounding the integral closed box 12 is the load introduction frame 22, which is arranged at least partially in the circumferential direction around the box.

The load introduction frame 22 includes specific contact points that align with the lower skin section 16, the front spar 18, and the rear spar 20 of the integral closed box 12. These contact points are configured for effective load transfer and distribution, ensuring that stresses are evenly spread across the closed box structure. The integration of these contact points helps maintain the structural integrity of the component by preventing stress concentrations and enhancing its durability.

Additionally, the load introduction system 10 features an attachment unit 24 that connects the integral closed box 12 to a base system. This attachment unit 24 is directly coupled to the load introduction frame 22, providing a stable and secure connection between the closed box and the base system. This setup facilitates the efficient transmission of forces and contributes to the overall reliability and performance of the aerodynamic closed box structure.

The load introduction frame 22 ensures efficient load transfer by distributing stresses evenly across the integral closed box 12, which improves structural stability and performance. By reinforcing key structural elements like the lower skin section 16, front spar 18, and rear spar 20, the system enhances the closed box's resilience to external forces. The circumferential arrangement of the frame allows for comprehensive load distribution, reducing stress concentrations and increasing durability. Furthermore, the attachment unit 24 ensures a secure connection to the base system, enhancing overall reliability. The configuration also simplifies assembly and integration, minimizing potential installation errors.

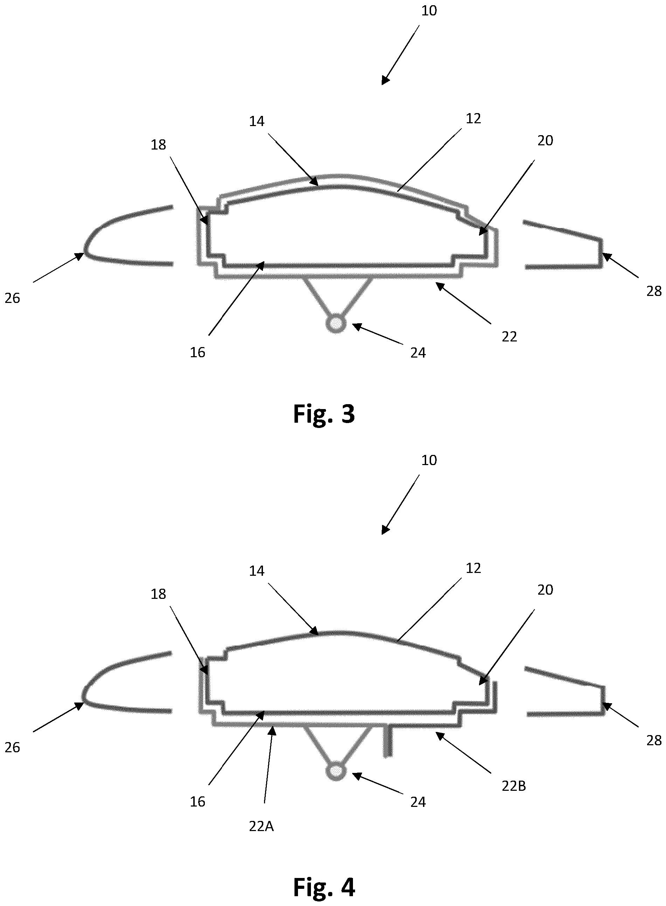

Figure 3 illustrates an enhanced view of another embodiment of the load introduction system 10 for an aerodynamic closed box structure component, focusing on the expanded configuration of the load introduction frame 22. The load introduction frame 22 in this embodiment has been further developed to include additional contact points specifically located at the upper skin section 14 of the integral closed box 12. This extension of the contact points ensures that the frame provides comprehensive support and load distribution across the entire structure. By incorporating contact points at the upper skin section 14, the load introduction frame 22 enhances its ability to manage and transfer loads effectively from all major sections of the closed box, including both the upper and lower skin sections, 14 and 16, as well as the front and rear spars, 18 and 20.

The inclusion of these additional contact points at the upper skin section 14 offers several advantages. It improves the overall load distribution by extending the support provided by the load introduction frame 22 to the upper part of the closed box. This leads to a more balanced distribution of stresses across the entire aerodynamic structure, reducing the risk of localized stress concentrations and potential structural weaknesses. The enhanced load introduction frame design not only reinforces the structural integrity of the closed box but also contributes to a more efficient and reliable performance of the aerodynamic component.

By integrating contact points at all critical areas of the closed box, including the upper skin section 14, the load introduction system 10 ensures a more robust and durable structure. This comprehensive approach to load distribution enhances the system's ability to withstand various operational stresses and environmental conditions, ultimately leading to improved overall performance and longevity of the aerodynamic closed box structure.

Figure 4 presents a detailed view of another embodiment of the load introduction system 10, with a different structural composition of the load introduction frame 22. This figure highlights that the load introduction frame 22 is constructed from at least two distinct frame elements, 22A and 22B. These frame elements are interconnected using a butt joint connection.

In this configuration, the frame elements 22A and 22B are joined directly at their ends through a butt joint, which simplifies the assembly process. The butt joint connection is an efficient method for connecting the frame elements 22A and 22B, involving aligning their ends and securing them together without the need for complex interlocking or overlapping components.

The advantage of using a butt joint for connecting the frame elements 22A and 22B includes a reduction in both production and assembly costs. This method allows for a more efficient manufacturing process and simplifies the construction of the load introduction frame 22. Furthermore, butt joints can provide strong and reliable connections, ensuring that the load introduction frame maintains its structural integrity and effectively supports the aerodynamic closed box 12.

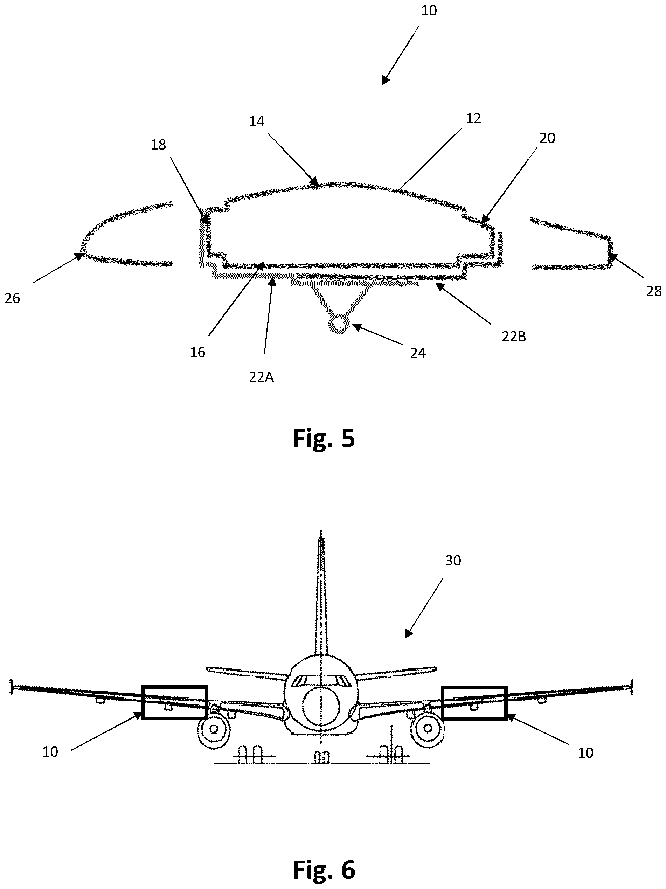

Figure 5 illustrates a detailed view of another embodiment the load introduction system 10, focusing on another different structural configuration of the load introduction frame 22. In this embodiment, the load introduction frame 22 is shown to include at least two frame elements 22A and 22B wherein these frame elements are configured to overlap each other partially.

The partial overlap between frame elements 22A and 22B enhances the structural strength and stability of the load introduction frame 22. By creating a continuous load path through the overlapping areas, the frame elements can effectively distribute and manage stresses over a larger area. This configuration improves the load transfer efficiency and reduces potential weak points in the frame, contributing to the overall robustness of the load introduction system 10.

The overlapping arrangement also assists in the precise alignment and securement of the frame elements during assembly, which can result in a more durable and reliable structure. This approach facilitates a strong and stable connection between the frame elements, ensuring that the load introduction frame 22 effectively supports the aerodynamic closed box 12 and maintains its structural integrity under various operating conditions.

In summary, the partial overlap of the frame elements 22A and 22B in the load introduction frame 22 enhances the system's strength, load distribution efficiency, and structural stability, contributing to the overall effectiveness of the load introduction system (10).

Fig. 6 shows an aircraft 30, highlighting one load introduction system 10 on each wing. The load introduction systems 10 are designed to transfer external loads into the wings' integral closed box structures while minimizing impact on aerodynamic performance and structural integrity. The locations of the load introduction system 10 highlighted on Fig. 6 can be seen as exemplary for any location on the wing or any location of the aircraft where this load introduction frame 22 can be used.

The advantage of having the load introduction frame 22 make only narrow contact with the integral closed box 12 is that it minimizes the impact on the box's overall aerodynamic performance and structural integrity. By ensuring that the contact points are limited and focused, the load introduction frame 22 helps maintain the aerodynamic efficiency of the structure, reducing potential disturbances in the airflow around the wing. Additionally, this narrow contact approach reduces weight and complexity in the load introduction system 10, potentially lowering manufacturing and assembly costs while preserving the strength and functionality of the integral closed box 12.

This configuration approach ensures that the structural load paths are optimized, enhancing both performance and longevity of the aircraft structure.

### Reference Signs

- 10: Load introduction system
- 12: Integral closed box
- 14: Upper skin section
- 16: Lower skin section
- 18: Front spar
- 20: Rear spar
- 22: Load introduction frame
- 24: Attachment unit
- 26: Nose cap
- 28: Trailing edge
- 30: Aircraft

## Claims

1. Load introduction system (10), comprising:
an aerodynamic closed box structure component comprising an integral closed box (12) having an upper skin section (14), a lower skin section (16), a front spar (18) and a rear spar (20);
a load introduction frame (22), wherein the load introduction frame (22) is arranged at least partly in circumferential direction around the integral closed box (12),
an attachment unit (24) for coupling the integral closed box (12) to a base system; wherein the attachment unit (12) is coupled to the load introduction frame (22).

2. Load introduction system (10) to claim 1, wherein the load introduction frame (22) comprises contact points at the lower skin section (16), the front spar (18) and the rear spar (20).

3. Load introduction system (10) according to claim 2, wherein the load introduction frame (22) further comprises contact points at the upper skin section (14).

4. Load introduction system (10) according to any one of the preceding claims, wherein the load introduction frame (22) comprises at least two frame elements (22A, 22B), wherein the least two frame elements (22A, 22B) are connected via a butt joint.

5. Load introduction system (10) according to any one of the preceding claims, wherein the load introduction frame (22) comprises at least two frame elements (22A, 22B), wherein the least two frame elements (22A, 22B) overlap at least partly.

6. Load introduction system (10) according to any one of the preceding claims, wherein the load introduction frame (22) comprises a multitude of frame elements.

7. Load introduction system (10) according to any one of the preceding claims, wherein the aerodynamic closed box structure component comprises a nose cap (26), wherein the nose cap (26) is preferably arranged at the load introduction frame (22) at least partly.

8. Load introduction system (10) according to any one of the preceding claims, wherein the aerodynamic closed box structure component comprises a trailing edge (28), wherein the trailing edge (28) is preferably arranged at the load introduction frame (22) at least partly.

9. Load introduction system (10) according to any one of the preceding claims, further comprising a second attachment unit to provide a dual load path.

10. Load introduction system (10) according to any one of the preceding claims, wherein the load introduction frame (22) is attached to the integral closed box (12) via a multitude of bolts.

11. Load introduction system (10) according to any one of the preceding claims, wherein the load introduction frame (22) is attached to the integral closed box (12) via bonding

12. Load introduction system (10) according to any one of the preceding claims, wherein the aerodynamic closed box structure component is made of a carbon fiber reinforced material.

13. Load introduction system (10) according to any one of the preceding claims, wherein the aerodynamic closed box structure component is an integrally formed structure.

14. Load introduction system (10) according to any one of the preceding claims, wherein the aerodynamic closed box structure component is a flap, flaperon or similar.

15. Aircraft (50) comprising a load introduction system (10) according to any one of the preceding claims.

## Amended claims

### Amended claims in accordance with Rule 137(2) EPC.

1. Load introduction system (10), comprising:
an aerodynamic closed box structure component comprising an integral closed box (12) having an upper skin section (14), a lower skin section (16), a front spar (18) and a rear spar (20);
a load introduction frame (22), wherein the load introduction frame (22) is arranged at least partly in circumferential direction around the integral closed box (12),
an attachment unit (24) for coupling the integral closed box (12) to a base system; wherein the attachment unit (24) is coupled to the load introduction frame (22),
wherein the aerodynamic closed box structure component is a flap or a flaperon.

2. Load introduction system (10) to claim 1, wherein the load introduction frame (22) comprises contact points at the lower skin section (16), the front spar (18) and the rear spar (20).

3. Load introduction system (10) according to claim 2, wherein the load introduction frame (22) further comprises contact points at the upper skin section (14).

4. Load introduction system (10) according to any one of the preceding claims, wherein the load introduction frame (22) comprises at least two frame elements (22A, 22B), wherein the least two frame elements (22A, 22B) are connected via a butt joint.

5. Load introduction system (10) according to any one of the preceding claims, wherein the load introduction frame (22) comprises at least two frame elements (22A, 22B), wherein the least two frame elements (22A, 22B) overlap at least partly.

6. Load introduction system (10) according to any one of the preceding claims, wherein the load introduction frame (22) comprises a multitude of frame elements.

7. Load introduction system (10) according to any one of the preceding claims, wherein the aerodynamic closed box structure component comprises a nose cap (26), wherein the nose cap (26) is preferably arranged at the load introduction frame (22) at least partly.

8. Load introduction system (10) according to any one of the preceding claims, wherein the aerodynamic closed box structure component comprises a trailing edge (28), wherein the trailing edge (28) is preferably arranged at the load introduction frame (22) at least partly.

9. Load introduction system (10) according to any one of the preceding claims, further comprising a second attachment unit to provide a dual load path.

10. Load introduction system (10) according to any one of the preceding claims, wherein the load introduction frame (22) is attached to the integral closed box (12) via a multitude of bolts.

11. Load introduction system (10) according to any one of the preceding claims, wherein the load introduction frame (22) is attached to the integral closed box (12) via bonding.

12. Load introduction system (10) according to any one of the preceding claims, wherein the aerodynamic closed box structure component is made of a carbon fiber reinforced material.

13. Load introduction system (10) according to any one of the preceding claims, wherein the aerodynamic closed box structure component is an integrally formed structure.

14. Aircraft (50) comprising a load introduction system (10) according to any one of the preceding claims.
